# EUROPEAN PATENT APPLICATION

(11) **EP 4 432 461 A1**
(43) Date of publication of application: **18.09.2024**
(21) Application number: 22902830.3
(22) Date of filing: 22.07.2022
(51) Int. Cl.: H01M 50/627, H01M 50/147

(54) **BATTERY TOP COVER PLATE AND BATTERY**

(30) Priority: 07.12.2021 CN 202123057247 U
(71) Applicant: Eve Power Co., Ltd., Jingmen Hubei 448000 (CN)
(72) Inventor: CHEN, Xianyang, Jingmen, Hubei 448000 (CN)
(74) Representative: Murgitroyd & Company
(86) International application number: PCT/CN2022/107265
(87) International publication number: WO 2023/103395

(57) **Abstract**

The application discloses a battery top cover sheet and a battery. The battery top cover sheet includes a top cover body (1), an electrolyte filling structure (11), a boss (12), and a process groove (13) are arranged on the top cover body (1), the electrolyte filling structure (11) includes a sinking groove (111) located on an upper surface of the top cover body (1) and a filling port (112) penetrating through the top cover body (1), the boss (12) is located on a lower surface of the top cover body (1) and arranged around the filling port (112), and the process groove (13) is arranged on a lower surface of the top cover body (1) and arranged around the boss (12).

## Description

The application claims priority to Chinese Patent Application No. 202123057247.1, filed on December 07, 2021, the contents of which are incorporated herein by reference in their entirety.

### TECHNICAL FIELD

The application relates to the technical field of battery technology, for example to a battery top cover sheet and a battery.

### BACKGROUND

A filling port is arranged on a top cover sheet of a battery used as one of components of the battery, to make it convenient to inject an electrolyte into the battery. After the electrolyte filling of the battery is completed, two times of sealing are generally performed on the filling port: The first time of sealing is completed by sealing rubber inserted into the filling port, and the second time of sealing is completed by a sealing aluminum sheet welded on the top cover sheet. However, a current filling port is usually a cylinder-shaped through-hole, and requires high positioning precision when a sealing aluminum sheet is mounted. As a result, it is difficult to ensure a sealing effect, and a contact area between a top cover sheet and sealing rubber at the filling port is small.

### SUMMARY

The application provides a battery top cover sheet. An electrolyte filling structure playing a role in guiding is arranged on the battery top cover sheet, to facilitate mounting of a sealing aluminum sheet and improve a sealing effect of a filling port, and a contact area between the top cover sheet and sealing rubber at the filling port is large, to achieve a good sealing effect.

The application further provides a battery. A filling port of the battery has good sealing performance, to improve practical safety performance of the battery.

Technical solutions of the application are as follows:
The application discloses a battery top cover sheet, including a top cover body, wherein an electrolyte filling structure, a boss, and a process groove are arranged on the top cover body, the electrolyte filling structure includes a sinking groove located on an upper surface of the top cover body and a filling port penetrating through the top cover body, the boss is located on a lower surface of the top cover body and arranged around the filling port, the process groove is arranged on a lower surface of the top cover body and arranged around the boss.

The application further discloses a battery, including a housing, a core, and the foregoing battery top cover sheet, wherein an upper end of the housing is opened, the core is arranged in the housing, and the battery top cover sheet covers the upper end of the housing to close the housing.

### DESCRIPTION OF DRAWINGS

FIG. 1 is a schematic diagram of a structure of a battery top cover sheet according to some embodiments of the application.
FIG. 2 is a cross-sectional view of a local structure of a battery top cover sheet according to some embodiments of the application.

### Reference numerals:

1, top cover body; 11, electrolyte filling structure; 111, sinking groove; 112, filling port; 12, boss; 13, process groove; 14, fillet.

### DETAILED DESCRIPTION

The technical solutions of the application will be described below in conjunction with the drawings and through specific implementations.

In the description of the application, it should be understood that, orientations or position relationships indicated by terms such as "center", "longitudinal", "transverse", "length", "width", "thickness", "up", "down", "front", "back", "left", "right", "vertical", "horizontal", "top", "bottom", "in", "out", "clockwise", "counterclockwise", "axial", "radial", and "circumferential" are orientations or position relationship shown based on the drawings, and are merely used for describing the application and simplifying the description, rather than indicating or implying that the apparatus or element should have a particular orientation or be constructed and operated in a particular orientation, and therefore, should not be construed as a limitation on the application.

In addition, a feature defined to be "first" or "second" may explicitly or implicitly include one or more features, and is used to differentially describe a feature, but not used to describe a sequence or weight. In the description of the application, unless otherwise stated, "a plurality of" means two or more than two.

In the descriptions of the application, it should be noted that, unless otherwise clearly specified and defined, terms such as "mounting", "interconnection", and "connection" shall be understood in a broad sense, for example, may be a fixing connection, a detachable connection, an integral connection, a mechanical connection, an electrical connection, a direct connection, an indirect connection by using an intermediate medium, and communication between interiors of two components. Those skilled in the art can understand specific meanings of the terms in the application according to specific situations.

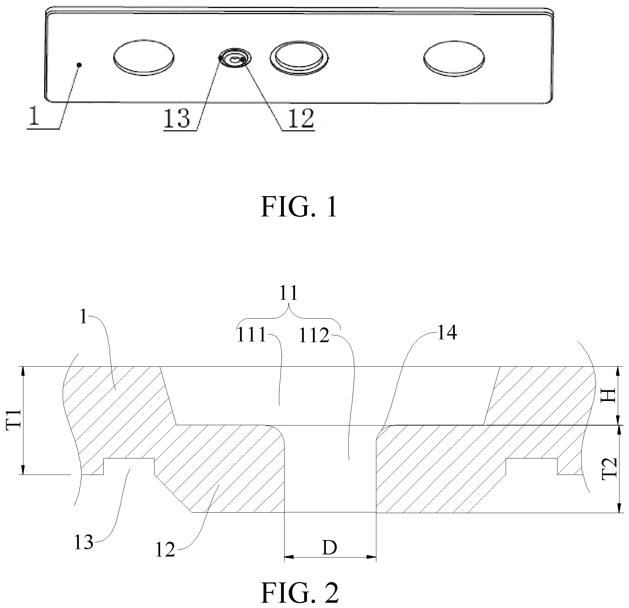

A specific structure of a battery top cover sheet of some embodiments of the application is described below with reference to FIG. 1 and FIG. 2.

The application discloses a battery top cover sheet. As shown in FIG. 1 and FIG. 2, the battery top cover sheet includes a top cover body 1, an electrolyte filling structure 11, a boss 12, and a process groove 13 are arranged on the top cover body 1, the electrolyte filling structure 11 includes a sinking groove 111 located on an upper surface of the top cover body 1 and a filling port 112 penetrating through the top cover body 1, the boss 12 is located on a lower surface of the top cover body 1 and arranged around the filling port 112, and the process groove 13 is arranged on a lower surface of the top cover body 1 and arranged around the boss 12.

It should be noted that, the foregoing upper surface and lower surface are defined as follows: When the battery top cover sheet covers a housing of a battery, a surface of the top cover body 1 far away from the housing of the battery is the upper surface, and the lower surface is arranged opposite to the upper surface.

It can be understood that, the added process groove 13 can ensure machining precision of the electrolyte filling structure 11 and the boss 12, thereby improving machining precision of the battery top cover sheet. The sinking groove 111 arranged on the upper surface of the top cover body 1 provides a guiding structure for mounting a sealing aluminum sheet, to facilitate subsequent welding of the sealing aluminum sheet and the top cover body 1. The boss 12 added to the lower surface of the top cover body 1 increases a thickness of the top cover body 1 at the sealing structure, thereby improving sealing performance of sealing rubber and the electrolyte filling structure 11, and improving a sealing effect. In addition, the sinking groove 111 is interconnected with the filling port 112. In a process of injecting an electrolyte into the battery, the sinking groove 111 can play a role in guiding the electrolyte, to ensure that the electrolyte can stably flow into the housing of the battery through the filling port 112.

In some embodiments, as shown in FIG. 2, a width of the boss 12 decreases gradually in a direction far away from the top cover body 1, and the boss 12 and the top cover body 1 are an integrated member. It may be understood that, the boss 12 is formed into a taper whose width decreases gradually in a downward direction. Such an arrangement can decrease the volume of the boss 12, thereby facilitating assembly of the top cover body 1 with another component (for example, a plastic member) of the battery. In addition, integration of the boss 12 and the top cover body 1 can simplify the structure of the entire battery top cover sheet, facilitate machining of the battery top cover sheet, and reduce manufacturing costs of the battery top cover sheet.

Certainly, it should be additionally noted herein that, in some embodiments, the taper angle and the cross-sectional shape and size of the boss 12 may be selected according to actual requirements, and relevant parameters of the boss 12 are not limited herein.

In some embodiments, as shown in FIG. 2, a diameter of the filling port 112 is D, a thickness of the top cover body 1 is T1, a depth of the sinking groove 111 is H, and a depth of the filling port 112 is T2, wherein 4*(H+T2-T1) <D≤(6*(H+T2-T1). It may be understood that, H+T2-T1 is just equal to a height by which the boss 12 exceeds the lower surface of the top cover body 1. The filling port 112 penetrates through this part, therefore, in an actual machining process, an excessively large or excessively small pore size of the filling port 112 does not facilitate machining. In some embodiments, controlling the diameter of the filling port 112 to range from 4 times to 6 times the height by which the boss 12 exceeds the lower surface of the top cover body 1 can facilitate machining of the filling port 112 and can ensure size precision of the filling port 112.

Certainly, it should be additionally noted herein that, in some embodiments, the diameter of the filling port 112 may alternatively be selected according to an actual requirement. In addition, the filling port 112 is unnecessarily in a shape of a circular hole, or may be in another shape of a polygonal hole or an elliptical hole.

In some embodiments, as shown in FIG. 2, a thickness of the top cover body 1 is T1, a depth of the sinking groove 111 is H, and a depth of the filling port 112 is T2, wherein T1≥T2 ≥H. It may be understood that, the thickness of the top cover body 1 greater than the depth of the filling port 112 can ensure strength of the top cover body 1 in a position wherein the filling port 112 is opened, to avoid occurrence of a phenomenon that the top cover body 1 is easily damaged in the position wherein the filling port 112 is opened. The depth of the filling port 112 greater than the depth of the sinking groove 111 can ensure that the electrolyte filling is normally and quickly performed, to reduce occurrence of a phenomenon of accumulating the electrolyte in the sinking groove 111.

In some embodiments, as shown in FIG. 2, a diameter of the sinking groove 111 decreases gradually in a downward direction. It may be understood that, the sinking groove 111 is formed into a tapered groove, thereby facilitating positioning of the sealing aluminum sheet and improving a sealing effect of the sealing aluminum sheet on the filling port 112.

In some embodiments, as shown in FIG. 2, the sinking groove 111 is a tapered groove, and a taper angle of the sinking groove 111 ranges from 110° to 1 11°. It may be understood that, an excessively large taper angle of the sinking groove 111 increases machining difficulty, and reduces positioning and sealing effects, and a small taper angle of the sinking groove 111 increases mounting difficulty of the sealing aluminum sheet. In some embodiments, the taper angle of the sinking groove 111 is set to 110° to 111°, which not only can facilitate machining of the sinking groove 111, but also can facilitate mounting of the sealing aluminum sheet and improve the positioning and sealing effects.

Certainly, in some embodiments of the application, both the shape and the size of the sinking groove 111 may be selected according to an actual requirement, and are not limited to the foregoing limitation.

In some embodiments, as shown in FIG. 2, a joint between the sinking groove 111 and the filling port 112 is provided with a fillet 14. It may be understood that, the added fillet 14 may increase accuracy of mounting the sealing rubber and the sealing aluminum sheet, and may reduce burrs generated when the top cover body 1 is manufactured through stamping.

In some embodiments, as shown in FIG. 2, a radius of the fillet 14 ranges from 0.1 mm to 0.5 mm. An excessively small radius of the fillet 14 does not facilitate machining, and an excessively large radius may reduce the sealing effect. In some embodiments, controlling the radius of the fillet 14 to range from 0.1 mm to 0.5 mm not only can facilitate machining, but also can improve the sealing effect. Certainly, in some embodiments of the application, the radius of the fillet 14 may be selected according to an actual requirement, and is not limited to 0.1 mm to 0.5 mm of the present embodiment.

In some embodiments, as shown in FIG. 2, a depth of the process groove 13 ranges from 0.1 mm to 0.5 mm. It may be understood that, an excessively large depth of the process groove 13 reduces strength of the top cover body 1, and an excessively small depth increases machining difficulty and reduces machining precision. In some embodiments, controlling the depth of the process groove 13 to range from 0.1 mm to 0.5 mm not only can ensure the depth of the top cover body 1, but also can reduce machining difficulty and ensure machining precision, thereby ensuring machining precision of the boss 12 and the sinking groove 111. Certainly, in some embodiments of the application, the depth of the process groove 13 may alternatively be selected according to an actual requirement, and are not limited to the foregoing limitation.

### Embodiment:

A battery top cover sheet of some embodiments of the application is described below with reference to FIG. 1 and FIG. 2.

The battery top cover sheet includes a top cover body 1, an electrolyte filling structure 11, a boss 12, and a process groove 13 are arranged on the top cover body 1, the electrolyte filling structure 11 includes a sinking groove 111 located on an upper surface of the top cover body 1 and a filling port 112 penetrating through the top cover body 1, the boss 12 is located on a lower surface of the top cover body 1 and arranged around the filling port 112, and the process groove 13 is arranged on a lower surface of the top cover body 1 and arranged around the boss 12. A width of the boss 12 decreases gradually in a downward direction, and a diameter of the sinking groove 111 decreases gradually in the downward direction. A diameter of the filling port 112 is D, a thickness of the top cover body 1 is T1, a depth of the sinking groove 111 is H, and a depth of the filling port 112 is T2, wherein T1≥T2≥H, and D=5*(H+T2-T1). A taper angle of the sinking groove 111 is 110.5°. A joint between the sinking groove 111 and the filling port 112 is provided with a fillet 14, a radius of the fillet 14 is 0.3 mm, and a depth of the process groove 13 is 0.3 mm.

Characteristics of the battery top cover sheet of some embodiments are as follows:
First: The added process groove 13 can ensure machining precision of the electrolyte filling structure 11 and the boss 12, thereby improving machining precision of the battery top cover sheet.
Second: The sinking groove 111 added to the upper surface of the top cover body 1 provides a guiding structure for mounting a sealing aluminum sheet, to facilitate subsequent welding of the sealing aluminum sheet and the top cover body 1.
Third: The boss 12 added to the lower surface of the top cover body 1 increases a thickness of the top cover body 1 at the sealing structure, thereby improving sealing performance of sealing rubber and the electrolyte filling structure 11, and improving a sealing effect.
Fourth: A joint between the sinking groove 111 and the filling port 112 is provided with a fillet 14, which increases accuracy of mounting the sealing rubber and the sealing aluminum sheet, and may reduce burrs generated when the top cover body 1 is manufactured through stamping.

The application further discloses a battery, including a housing, a core, and the foregoing battery top cover sheet, wherein an upper end of the housing is opened, the core is arranged in the housing, and the battery top cover sheet covers the upper end of the housing to close the housing.

The battery of the application has the foregoing battery top cover sheet. Therefore, a filling port 112 of the battery has good sealing performance, to improve practical safety performance of the battery.

In description of this specification, description of reference terms such as "some embodiments" and "other embodiments" means including specific features, structures, materials, or features described in the embodiment or example in at least one embodiment or example of the application. In this specification, schematic descriptions of the foregoing terms do not necessarily refer to the same embodiment or example. Moreover, the specific features, structures, materials, or characteristics described may be combined in any one or more embodiments or examples in an appropriate manner.

## Claims

1. A battery top cover sheet, comprising a top cover body (1), wherein an electrolyte filling structure (11), a boss (12), and a process groove (13) are arranged on the top cover body (1), the electrolyte filling structure (11) comprises a sinking groove (111) located on an upper surface of the top cover body (1) and a filling port (112) penetrating through the top cover body (1), the boss (12) is located on a lower surface of the top cover body (1) and arranged around the filling port (112), and the process groove (13) is arranged on a lower surface of the top cover body (1) and arranged around the boss (12).

2. The battery top cover sheet of claim 1, wherein a width of the boss (12) decreases gradually in a direction far away from the top cover body (1), and the boss (12) and the top cover body (1) are an integrated member.

3. The battery top cover sheet of claim 1, wherein a diameter of the filling port (112) is D, a thickness of the top cover body (1) is T1, a depth of the sinking groove (111) is H, and a depth of the filling port (112) is T2, wherein 4*(H+T2-T1) <D≤(6*(H+T2-T1).

4. The battery top cover sheet of claim 1, wherein a thickness of the top cover body (1) is T1, a depth of the sinking groove (111) is H, and a depth of the filling port (112) is T2, wherein T1≥T2≥H.

5. The battery top cover sheet of claim 1, wherein a diameter of the sinking groove (111) decreases gradually in a downward direction.

6. The battery top cover sheet of claim 5, wherein the sinking groove (111) is a tapered groove, and a taper angle of the sinking groove (111) ranges from 110° to 111°.

7. The battery top cover sheet of claim 1, wherein a joint between the sinking groove (111) and the filling port (112) is provided with a fillet (14).

8. The battery top cover sheet of claim 7, wherein a radius of the fillet (14) ranges from 0.1 mm to 0.5 mm.

9. The battery top cover sheet of claim 1, wherein a depth of the process groove (13) ranges from 0.1 mm to 0.5 mm.

10. A battery, comprising a housing, a core, and a battery top cover sheet, wherein an upper end of the housing is opened, the core is arranged in the housing, and the battery top cover sheet covers the upper end of the housing to close the housing, wherein
the battery top cover sheet comprises a top cover body (1), an electrolyte filling structure (11), a boss (12), and a process groove (13) are arranged on the top cover body (1), the electrolyte filling structure (11) comprises a sinking groove (111) located on an upper surface of the top cover body (1) and a filling port (112) penetrating through the top cover body (1), the boss (12) is located on a lower surface of the top cover body (1) and arranged around the filling port (112), and the process groove (13) is arranged on a lower surface of the top cover body (1) and arranged around the boss (12).

11. The battery of claim 10, wherein a width of the boss (12) decreases gradually in a direction far away from the top cover body (1), and the boss (12) and the top cover body (1) are an integrated member.

12. The battery of claim 10, wherein a diameter of the filling port (112) is D, a thickness of the top cover body (1) is T1, a depth of the sinking groove (111) is H, and a depth of the filling port (112) is T2, wherein 4*(H+T2-T1) <D≤(6*(H+T2-T1).

13. The battery of claim 10, wherein a thickness of the top cover body (1) is T1, a depth of the sinking groove (111) is H, and a depth of the filling port (112) is T2, wherein T1≥T2≥H.

14. The battery of claim 10, wherein a diameter of the sinking groove (111) decreases gradually in a downward direction.

15. The battery of claim 14, wherein the sinking groove (111) is a tapered groove, and a taper angle of the sinking groove (111) ranges from 110° to 111°.

16. The battery of claim 10, wherein a joint between the sinking groove (111) and the filling port (112) is provided with a fillet (14).

17. The battery of claim 16, wherein a radius of the fillet (14) ranges from 0.1 mm to 0.5 mm.

18. The battery of claim 10, wherein a depth of the process groove (13) ranges from 0.1 mm to 0.5 mm.
